# DEMANDE DE BREVET EUROPEEN

(11) **EP 1 813 174 A2**
(43) Date de publication de la demande: **01.08.2007**
(21) Numéro de dépôt: 07290064.0
(22) Date de dépôt: 18.01.2007
(51) Int. Cl.: A47J 37/06

(54) **Appareil de cuisson du type gaufrier**

(30) Priorité: 23.01.2006 FR 0600596
(71) Demandeur: SEB SA, 69130 Ecully (FR)
(72) Inventeur: Bouvier, Pierre, 38300 Bourgoin-Jallieu (FR)
(74) Mandataire: Lemoine, Jean-Sébastien

(57) **Abrégé**

L'invention concerne un appareil de cuisson (1) comprenant deux sous-ensembles (2,3) qui comprennent chacun un corps (5,6) et qui sont articulés l'un à l'autre, par l'intermédiaire de leurs corps (5,6), par une charnière (4), au moins l'un des sous-ensembles (2,3) comprenant une poignée (11,16) articulée au corps correspondant (5,6) selon un axe de pivotement (12) parallèle à l'axe (13) de la charnière (4), entre une position de rangement et une position d'utilisation dans laquelle elle est orientée de façon à permettre le déplacement du corps supérieur par rapport au corps inférieur, l'axe de pivotement (12) étant plus éloigné de l'axe (13) de la charnière (4) que du bord avant (14) du corps correspondant (5,6).

Selon l'invention, la poignée (11,16) est articulée au corps (5,6) de sorte que, quand elle est dans sa position de rangement, elle est orientée de façon à longer ce corps (7,8) dans le sens de la longueur.

## Description

L'invention se rapporte à un appareil de cuisson du type comprenant deux sous-ensembles de cuisson articulés l'un à l'autre par une charnière, comme, par exemple, un gaufrier.

On connaît un appareil de cuisson du type gaufrier comprenant deux sous-ensembles de cuisson qui comprennent chacun un corps de cuisson et qui sont articulés l'un à l'autre par l'intermédiaire des deux corps de cuisson par une charnière, le sous-ensemble supérieur de cuisson comprenant une poignée articulée au corps supérieur de cuisson selon un axe de pivotement parallèle à l'axe de la charnière entre une position d'utilisation et une position de rangement, l'axe de pivotement étant plus éloigné de l'axe de la charnière que du bord avant du corps supérieur de cuisson qui est opposé à la charnière.

Un tel appareil de cuisson est par exemple décrit dans la demande de brevet JP 2000 037 309. Cependant, afin de ne pas avoir un appareil occupant une place importante, notamment quand il est rangé, la poignée a sa longueur limitée à la hauteur du corps de cuisson auquel elle est articulée de sorte que, quand elle est dans sa position de rangement dans laquelle est disposée le long d'une paroi de flanc du corps, elle ne soit pas proéminente. En conséquence, quand elle est dans sa position d'utilisation, vu sa taille, elle est difficilement accessible et ne permet pas d'avoir un bras de levier important pour permettre le déplacement du corps supérieur par rapport au corps inférieur, surtout pour faciliter la fermeture complète de l'appareil contenant de la pâte à cuire.

La présente invention vise à réaliser un appareil de cuisson du type précité dont la poignée permet d'avoir un bras de levier important sans pour autant rendre l'appareil de cuisson volumineux, notamment quand il est rangé.

Selon l'invention, la poignée est articulée au corps de cuisson de sorte que, quand elle est dans sa position de rangement, elle est orientée sensiblement à 180° par rapport à sa position d'utilisation de façon à longer le corps supérieur de cuisson dans le sens de la longueur.

Ainsi, combiné à la position de l'axe de pivotement par rapport à la charnière et au bord avant de l'appareil, il est possible de rallonger la poignée afin d'avoir un bras de levier important quand elle est dans sa position d'utilisation, tout en ne dépassant pas de façon trop importante de l'appareil quand elle est dans sa position de rangement du fait qu'alors elle longe le corps supérieur sur plus de la moitié de sa longueur.

D'autres particularités et avantages de la présente invention apparaîtront dans la description détaillée de trois modes de réalisation donnés à titre d'exemples non limitatifs et illustrés dans les dessins dans lesquels
La figure 1 est une vue de dessus en perspective d'un appareil de cuisson conforme à un premier mode de réalisation de la présente invention,
La figure 2 est une vue de côté de l'appareil de la figure 1, les poignées étant en position d'utilisation,
La figure 3 est une vue similaire à la figure 2, les poignées étant en position de rangement,
La figure 4 est une vue similaire à la figure 3, l'appareil étant rangé, reposant sur ses poignées en position de rangement,
La figure 5 est une vue similaire à la figure 1, le corps supérieur étant dépourvu de sa coquille de façon à laisser apparaître un premier type de dispositif de pivotement,
La figure 6 est une vue en perspective illustrant le premier type de dispositif de pivotement,
La figure 7 est une vue similaire à la figure 6 illustrant un deuxième type de dispositif de pivotement,
La figure 8 est une vue similaire aux figures 6 et 7 illustrant un troisième type de dispositif de pivotement, et
La figure 9 est une vue en perspective illustrant un organe de réception du dispositif de pivotement de la figure 8.

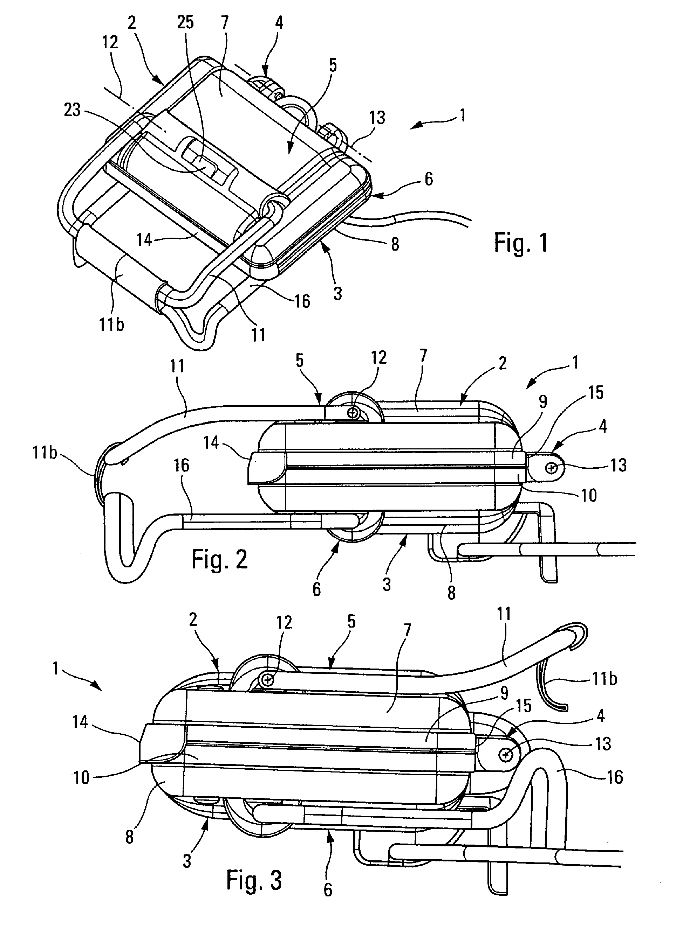

Comme on peut le voir aux figures 1 à 4 un appareil de cuisson 1 (en l'occurrence un gaufrier) comprend deux sous-ensembles de cuisson 2,3 articulés l'un à l'autre par une charnière 4. Chaque sous-ensemble 2,3 comprend un corps de cuisson 5,6 qui est adapté à cuire un aliment et par lequel le sous-ensemble de cuisson 2,3 est relié à la charnière 4. De façon classique, chaque corps de cuisson 5,6 comprend un capot 7,8, une plaque de cuisson 9,10 pour cuire l'aliment, et une résistance électrique de chauffe 10b.

Par ailleurs, le sous-ensemble supérieur de cuisson 2 comprend une poignée 11 qui est articulée au corps supérieur de cuisson 5 (et plus précisément au capot supérieur 7) selon un axe de pivotement 12 qui est parallèle à l'axe 13 de la charnière 4. L'axe de pivotement 12 est disposé de façon à être plus éloigné de l'axe 13 de la charnière 4 que du bord avant 14 du corps supérieur de cuisson 5 qui est opposé au bord arrière 15 portant la charnière 4. La poignée 11 est montée mobile par rapport au corps supérieur de cuisson 5 entre une position d'utilisation et une position de rangement.

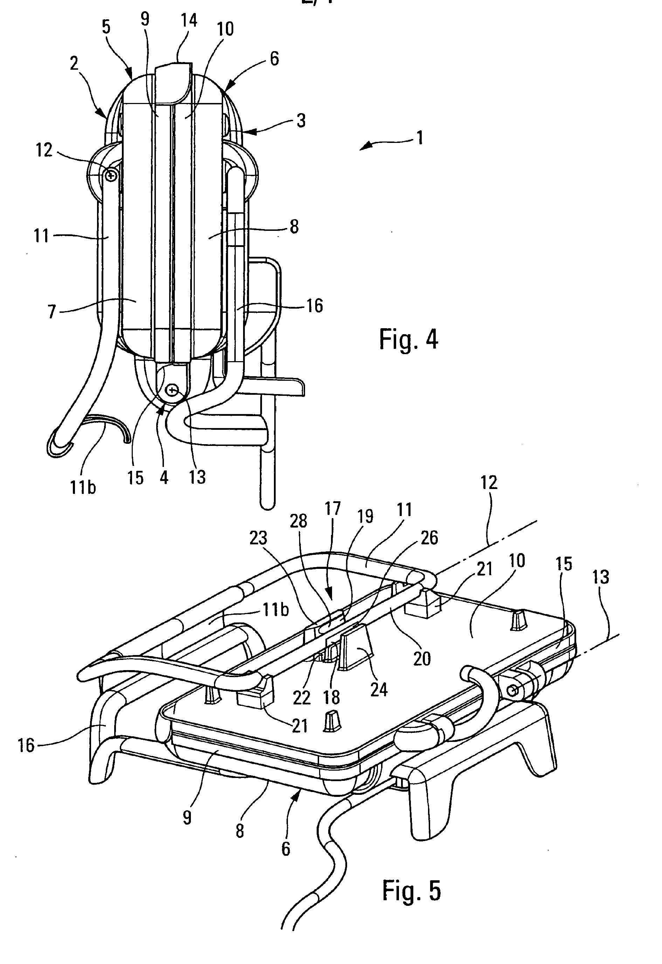

Quand elle est dans sa position d'utilisation, la poignée 11 est orientée de façon à permettre le déplacement du corps supérieur de cuisson 5 par rapport au corps inférieur de cuisson 6, et, de préférence, elle s'étend sensiblement selon un plan parallèle au plan défini par la plaque supérieure de cuisson 9 (cf. figures 1, 2 et 5). Quand elle est dans sa position de rangement, elle est orientée sensiblement à 180° par rapport à sa position d'utilisation de façon à longer le corps supérieur de cuisson 5 dans le sens de la longueur, c'est-à-dire en direction de la charnière 4, et de préférence elle s'étend également sensiblement selon le même plan qu'en position d'utilisation (cf. figures 3 et 4).

De ce fait, il est possible d'utiliser une poignée 11 particulièrement longue de façon à avoir un bras de levier important quand elle est dans sa position d'utilisation, sans que cela n'augmente considérablement le volume de l'appareil quand elle est dans sa position de rangement.

Dans les présents modes de réalisation, le sous-ensemble inférieur 3 comprend également une poignée 16 montée sur le corps inférieur de cuisson 8, et ayant les mêmes caractéristiques que la poignée 11 qui est montée sur le corps supérieur de cuisson 7. De plus, les deux poignées 11,16 sont conformées de façon à pouvoir verrouiller les deux corps de cuisson 5,6 dans leur position fermée quand elles sont dans leur position de fonctionnement. A cet effet, dans l'exemple illustré à la figure 2, la poignée supérieure 11 comprend un verrou 11b adapté à s'engager avec la poignée inférieure 16.

Chaque poignée 11,16 est articulée au corps de cuisson 5,6 correspondant par l'intermédiaire d'un dispositif de pivotement 17 qui est conformé de sorte que leur position d'utilisation est une position stabilisée. De ce fait, lors du déplacement du corps supérieur 5 selon l'axe 13 de la charnière 4, la poignée supérieure 11 reste immobile par rapport à ce corps 5, ce qui permet d'utiliser au mieux la longueur du bras de levier. Dans les présents modes de réalisation, chaque dispositif de pivotement 17 est également conformé de sorte que la position de rangement de la poignée 11,16 correspondante est une position stabilisée. De ce fait, dans cette position stable, les poignées 11,16 peuvent servir de pied pour le rangement de l'appareil 1 dans une position verticale (cf. figure 4).

Chaque dispositif de pivotement 17 comprend un organe d'engagement 18 qui est porté par la poignée correspondante 11,16, et un organe de réception 19 qui coopère avec l'organe d'engagement 18 et qui est porté par le corps de cuisson correspondant 5,6.

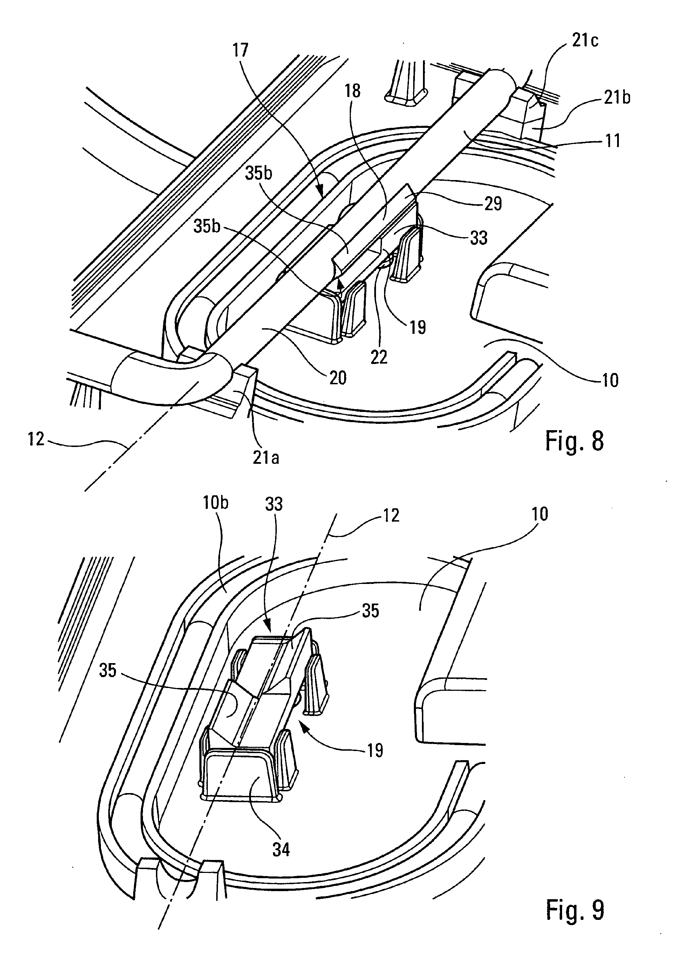

Dans les trois modes de réalisation, l'organe d'engagement 18 est porté de façon immobile par la poignée 11,16 correspondante. De façon plus précise, comme on peut le voir aux figures 5 à 8, l'organe d'engagement 18 est porté par un arbre de pivotement 20 qui est la partie de la poignée 11,16 s'étendant selon l'axe de pivotement 12. Cet arbre de pivotement 20 est supporté par le corps 5,6 correspondant par l'intermédiaire d'une entretoise 21 qui fait office de palier lisse et qui permet également, notamment quand la poignée 11,16 est réalisée dans une matière particulièrement conductrice de chaleur (comme l'aluminium), de l'isoler thermiquement du corps de cuisson 5,6 (et plus particulièrement de la plaque de cuisson 9,10). L'entretoise 21 peut ainsi être réalisée en deux parties: une partie basse 21b en matière fortement conductrice comme l'aluminium, et une partie haute 21c en matière faiblement conductrice thermiquement, tel qu'une matière plastique, la « bakélite » par exemple.

Par ailleurs, l'organe de réception 19 est monté mobile sur le corps de cuisson 5,6 correspondant entre une position engagée dans laquelle la poignée 11,16 correspondante est dans l'une ou l'autre de ses deux positions stabilisées du fait de la coopération entre l'organe d'engagement 18 et l'organe de réception 19, et une position libérée dans laquelle la poignée 11,16 est libre en rotation. Dans les trois modes de réalisation, l'organe de réception 19 est sollicité élastiquement dans sa position engagée, et le dispositif de pivotement 17 comprend un organe de commande manuelle qui est adapté à entraîner l'organe de réception 19 de sa position engagée à sa position libérée.

Dans le premier mode de réalisation, comme on peut le voir aux figures 2 et 4, le dispositif de pivotement 17 est conformé de sorte que la position stabilisée de la poignée 11,16 est une position bloquée, c'est à dire une position infranchissable. Afin de permettre toutefois son déplacement, l'organe de réception 19 qui est sollicité dans sa position engagée par un ressort 22, coopère avec l'organe de commande manuelle qui est formé par un bouton de commande 23. Le bouton de commande 23 est monté en translation dans un guide 24 traversant le capot 7,8 correspondant, et possède une surface d'activation 25 accessible de l'extérieur par un utilisateur. De plus, le bouton de commande 23 porte l'organe de réception 19.

Afin de permettre le blocage de la poignée 11,16 dans chacune de ses deux positions stabilisées quand l'organe de commande 19 (et le bouton de commande 23) est dans sa position engagée ainsi que le déplacement du bouton de commande 23 (et de l'organe de réception 19) quand la poignée 11,16 est immobilisée, l'organe d'engagement 18 est formé par deux méplats 26 (un par position stabilisée de la poignée 11,16) qui sont réalisés sur l'arbre de pivotement 20 en étant axialement dans la même position et angulairement espacé conformément à l'amplitude angulaire entre la position d'utilisation et la position de rangement de la poignée 11, 16. Dans le même but, l'organe de réception 19 comprend une surface d'arrêt 27 plane qui s'étend parallèlement à la direction de translation du bouton de commande 23 et qui est adaptée à recevoir en butée, quand l'organe de réception 19 n'est pas dans sa position libérée, le méplat 26 correspondant à la position stabilisée de la poignée 11,16, orienté parallèlement à cette surface d'arrêt 27. L'organe de réception 19 comprend également une cavité 28 qui se trouve en face de l'arbre de pivotement 20 quand l'organe de réception 19 est dans sa position libérée, et qui est conformée de façon à permettre la rotation de cet arbre 20.

Ainsi, l'utilisateur voulant faire pivoter une poignée 11, 16, exerce une pression sur le bouton de commande 23 de sorte que la surface d'arrêt 27 coulisse le long du méplat 26 correspondant à la position initiale de la poignée, jusqu'à venir dans sa position libérée définie par sa mise en butée contre un organe de butée 27b porté par la plaque de cuisson 9,10 correspondante. Dans cette position, l'arbre de pivotement 20 se trouve en face de la cavité 28 et la poignée 11,16 peut être pivotée.

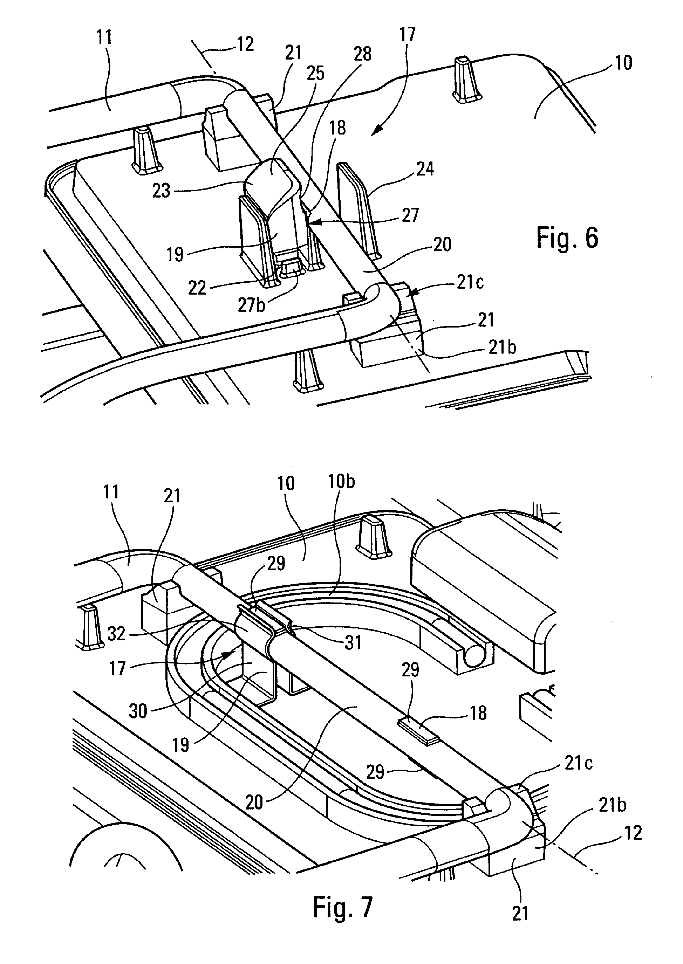

Dans les deuxième et troisième modes de réalisation, comme on peut le voir aux figures 7 à 9, le dispositif de pivotement 17 est conformé de façon à permettre le passage de l'organe de réception 19 de sa position engagée à sa position libérée par le franchissement d'un point dur. Du fait que la position engagée de l'organe de réception 19 est une position franchissable, la poignée 11 forme l'organe de commande manuelle permettant d'entraîner cet organe dans sa position libérée. Dans ces modes de réalisation, l'organe d'engagement 18 est formé par au moins un ergot 29 qui sont réalisés sur l'arbre de pivotement 20.

Dans le deuxième mode de réalisation, comme on peut le voir à la figure 7, l'organe de réception 19 est formé par au moins une paire de lames 30 qui sont montées de façon pivotante sur le corps de cuisson supérieur 5 (de façon plus précise, sur la plaque de cuisson supérieure 9). Les deux lames 30 sont disposées de part et d'autre de l'arbre de pivotement 20 et, de ce fait, encadrent l'organe d'engagement 18 quelle que soit la position de la poignée 11. Les lames 30 sont sollicitées dans leur position engagée par leur propre élasticité de façon à venir par défaut en butée contre l'ergot 29 et ainsi stabiliser la poignée 11 dans la position stabilisée correspondante. De façon plus précise, les deux lames 30 sont adaptées à venir conjointement en butée par leur extrémité libre 31 contre l'ergot 29 quand la poignée 11 est dans sa position stabilisée correspondante. Par ailleurs, afin d'éviter que l'arbre de pivotement 20 écarte les lames 30, celles-ci comprennent une portion courbe 32 ayant une forme de demi cylindre de façon à le contourner. Ici, deux ergots 29 (un par position stabilisée) de la poignée 11 sont associés à chaque paire de lames 30. Les deux ergots 29 sont angulairement espacés conformément à l'amplitude angulaire entre la position d'utilisation et la position de rangement de la poignée 11.

Ainsi, l'utilisateur voulant faire pivoter la poignée 11, exerce une force suffisante sur cette dernière pour que le premier ergot 29 correspondant à la position stabilisée initiale écarte les deux lames 30 en agissant sur leur extrémité libre 31. Une fois l'écartement suffisant, la rotation de la poignée 11,16 est plus facile à réaliser, du fait notamment que les deux ergots 29 se trouvent au niveau des deux portions courbes 32. La poignée 11 se trouve ensuite automatiquement stabilisée dès que le second ergot 29 se trouve entre les deux extrémités libres 31.

Dans le troisième mode de réalisation, l'organe de réception 19 qui est sollicité dans sa position engagée par un ressort 22, comprend une plaque 33 qui est montée en translation dans un guide 34 fixé au corps de cuisson 5 supérieur (plus précisément, à la plaque de cuisson supérieure 9), et qui, dans sa position engagée, est en butée contre l'arbre de pivotement 20. La plaque 33 comprend au moins une surface d'arrêt 35 (en l'occurrence deux, une par position stabilisée) qui est disposée et orientée de façon à recevoir en butée, quand la poignée 11 est dans une position stabilisée, l'ergot 29 (le même pour les deux surfaces d'arrêt 35), et ainsi à stabiliser la poignée 11. Dans le présent mode de réalisation, les deux surfaces d'arrêt 35 sont axialement décalés et sont chacune inclinées de façon à recevoir la surface de butée 35b correspondante portée par l'ergot 29, ce dernier étant conformé de façon à pouvoir coopérer alternativement avec les deux surfaces d'arrêt 35.

Ainsi, l'utilisateur voulant faire pivoter une poignée 11 exerce une force suffisante sur cette dernière pour que l'ergot 29 appuie contre la surface d'arrêt 35 correspondant à cette position stabilisée (par l'intermédiaire de la surface de butée 35b associée à cette surface d'arrêt 35) et entraîne la plaque 33 à l'encontre du ressort 22. Une fois la plaque 33 suffisamment éloignée de sa position engagée, la rotation de la poignée 11,16 est plus facile à réaliser, du fait notamment de l'angle existant entre l'ergot 29 et l'organe de réception 18 au niveau de leur point de contact. La poignée 11 se trouve ensuite automatiquement stabilisée dès que l'autre surface de butée 35b de l'ergot 29 se trouve en butée contre l'autre surface d'arrêt 35.

Des modifications peuvent être apportées aux modes de réalisation.

Il serait possible que l'organe d'engagement 18 soit monté mobile sur la poignée 11,16 correspondante entre une position engagée et une position libérée, l'organe de réception 19 étant montée immobile soit fixe sur le corps de cuisson 5,6 correspondant.

Il serait possible que la charnière de l'appareil soit une charnière démontable par l'utilisateur et/ou une charnière à axe mobile.

La présente invention s'applique non seulement aux appareils de cuisson (du type gaufrier) dont les deux sous-ensembles de cuisson ont deux poignées identiques articulées à leur corps, mais également à ceux dont les deux poignées articulées aux corps correspondant sont différentes, et à ceux dont seul un sous-ensemble de cuisson (le sous-ensemble supérieur ou le sous-ensemble inférieur) comprend une poignée articulée, l'autre sous-ensemble comprenant alors une poignée pouvant être fixe et/ou réduite par rapport à la poignée articulée du premier sous-ensemble de cuisson.

## Revendications

1. Appareil de cuisson (1) comprenant deux sous-ensembles de cuisson (2,3) qui comprennent chacun un corps de cuisson (5,6), les deux sous-ensembles de cuisson (2,3) étant articulés l'un à l'autre par l'intermédiaire des deux corps de cuisson (5,6) par une charnière (4) portée par le bord arrière (15) de chaque corps de cuisson (5,6), au moins l'un des sous-ensembles de cuisson (2,3) comprenant une poignée (11,16) articulée au corps de cuisson correspondant (5,6) selon un axe de pivotement (12) parallèle à l'axe (13) de la charnière (4) entre une position d'utilisation dans laquelle elle est orientée de façon à permettre le déplacement du corps supérieur de cuisson par rapport au corps inférieur de cuisson, et une position de rangement, l'axe de pivotement (12) étant plus éloigné de l'axe (13) de la charnière (4) que du bord avant (14) du corps de cuisson correspondant (5,6) opposé à la charnière (4), **caractérisé en ce que** la poignée (11,16) est articulée au corps de cuisson (7,8) de sorte que, quand elle est dans sa position de rangement, elle est orientée de façon à longer ce corps de cuisson (7,8) dans le sens de la longueur.

2. Appareil de cuisson (1) selon la revendication 1, **caractérisé en ce que** la poignée (11,16) dans sa position d'utilisation s'étend sensiblement selon le plan défini par la plaque de cuisson (9,10) du corps de cuisson correspondant (7,8).

3. Appareil de cuisson (1) selon la revendication 1 ou 2, **caractérisé en ce que** la poignée (11,16) dans sa position de rangement est orientée à sensiblement 180° de sa position d'utilisation.

4. Appareil de cuisson (1) selon l'une des revendications 1 à 3, **caractérisé en ce que** la poignée (11,16) est articulée au corps de cuisson (7,8) par l'intermédiaire d'un dispositif de pivotement (17) conformé de sorte que la position d'utilisation de la poignée (11,16) est une position stabilisée.

5. Appareil de cuisson (1) selon la revendication 4, **caractérisé en ce que** le dispositif de pivotement (17) est conformé de sorte que la position de rangement de la poignée (11,16) est une position stabilisée.

6. Appareil de cuisson (1) selon la revendication 4 ou 5, **caractérisé en ce que** le dispositif de pivotement (17) comprend un organe d'engagement (18) porté par la poignée (11,16), et un organe de réception (19) coopérant avec l'organe d'engagement (18) et porté par le corps de cuisson (7,8), l'un des deux organes (18,19) étant mobile entre une position engagée dans laquelle la poignée (11,16) est dans une position stabilisée, et une position libérée dans laquelle la poignée (11,16) est libre en rotation.

7. Appareil de cuisson (1) selon la revendication 6, **caractérisé en ce que** le dispositif de pivotement (17) est conformé de façon à permettre le passage de chaque position stabilisée de la poignée (11,16) par le franchissement d'un point dur.

8. Appareil de cuisson (1) selon la revendication 6, **caractérisé en ce que** le dispositif de pivotement (17) est conformé de sorte que chaque position stabilisée de la poignée (11,16) est une position bloquée.

9. Appareil de cuisson (1) selon l'une des revendications 6 à 8, **caractérisé en ce que** l'organe mobile (18,19) est sollicité élastiquement dans sa position engagée.

10. Appareil de cuisson (1) selon l'une des revendications 6 à 9, **caractérisé en ce qu'**un organe de commande manuelle (11,16,23) est adapté à entraîner l'organe mobile (18,19) de sa position engagée à sa position libérée.

11. Appareil de cuisson (1) selon la revendication 10 dépendante de la revendication 7, **caractérisé en ce que** l'organe de commande manuelle est formé par la poignée (11,16).

12. Appareil de cuisson (1) selon la revendication 10 dépendante de la revendication 8, **caractérisé en ce que** l'organe de commande manuelle est formé par un bouton de commande (23).

13. Appareil de cuisson (1) selon l'une des revendications 6 à 12, **caractérisé en ce que** l'organe d'engagement (18) est porté de façon immobile par un arbre de pivotement (20) de la poignée (11,16), qui s'étend selon l'axe de pivotement (12).

14. Appareil de cuisson (1) selon les revendications 7, 9, 11 et 13, **caractérisé en ce que** l'organe de réception (19) est formée par deux lames (30) disposées de part et d'autre de l'arbre de pivotement (20), sollicitées dans leur position engagée par leur propre élasticité de façon à venir conjointement en butée contre un ergot (29) faisant office d'organe d'engagement (18) associé à une position stabilisée de la poignée (11,16).

15. Appareil de cuisson (1) selon les revendications 7, 9, 11 et 13, **caractérisé en ce que** l'organe de réception (19) comprend au moins une surface d'arrêt (35) montée en translation par rapport au corps de cuisson (5) sollicitée par un ressort (22) et orientée de façon à recevoir en butée un ergot (29) faisant office d'organe d'engagement (18) associé à une position stabilisée de la poignée (11,16).

16. Appareil de cuisson (1) selon les revendications 8, 9, 12 et 13, **caractérisé en ce que** l'organe de réception (19) est porté par le bouton de commande manuelle (23) qui est sollicité dans sa position engagée par un ressort (22), et comprend, d'une part, une cavité (28) qui se trouve en face de l'arbre de pivotement (20) quand l'organe de réception (19) est dans sa position libérée, et qui est conformée de façon à permettre la rotation de cet arbre (20), et, d'autre part, une surface d'arrêt (27) qui s'étend parallèlement à la direction de translation du bouton de commande (23) et qui immobilise un méplat (26) faisant office d'organe d'engagement (18) associé à une position stabilisée de la poignée (11,16), quand l'organe de réception (19) n'est pas dans sa position libérée.
